# EUROPÄISCHE PATENTSCHRIFT

(11) **EP 3 112 230 B1**
(45) Veröffentlichungstag und Bekanntmachung des Hinweises auf die Patenterteilung: **05.05.2021**
(21) Anmeldenummer: 16001166.4
(22) Anmeldetag: 21.05.2016
(51) Int. Cl.: B60T 13/22, B60T 13/38, B60T 17/08

(54) **FESTSTELLBREMSMODUL, BREMSANLAGE UND FAHRZEUG DAMIT SOWIE VERFAHREN ZUM BETREIBEN EINER FESTSTELLBREMSEINRICHTUNG MIT EINEM SOLCHEN MODUL**
PARKING BRAKE MODULE, BRAKE SYSTEM AND VEHICLE USING SAME AND METHOD FOR OPERATING A PARKING BRAKE HAVING SUCH A MODULE
MODULE DE FREIN DE STATIONNEMENT, INSTALLATION DE FREINAGE ET VEHICULE AINSI EQUIPE ET PROCEDE DE FONCTIONNEMENT D'UN DISPOSITIF DE FREIN DE STATIONNEMENT AVEC UN TEL MODULE

(30) Priorität: 29.06.2015 DE 102015008377
(43) Veröffentlichungstag der Anmeldung: 04.01.2017
(73) Patentinhaber: WABCO GmbH, 30432 Hannover (DE)
(72) Erfinder: Beier, Peter, 31515 Wunstorf (DE); Bensch, Uwe, 30161 Hannover (DE); Couppee, Ulrich, 31863 Coppenbruegge (DE); Elze, Petra, 30455 Hannover (DE); Lichtenberg, Wolfgang, 30457 Hannover (DE); Oeser, Christian, 30179 Hannover (DE); Otremba, Robert, 30952 Ronnenberg (DE); Schappler, Hartmut, 30455 Hannover (DE); Steinfeld, Dieter, 30455 Hannover (DE); Waszkewitz, Julian, 30161 Hannover (DE)

(56) Entgegenhaltungen:
- DE-A1- 10 336 611
- DE-B3-102008 007 877

## Beschreibung

Die Erfindung betrifft ein Feststellbremsmodul einer Feststellbremseinrichtung gemäß dem Oberbegriff von Anspruch1, eine Bremsanlage mit einer Feststellbremseinrichtung, ein Fahrzeug, insbesondere Nutzfahrzeug, sowie ein Verfahren zum Betreiben einer Feststellbremseinrichtung gemäß dem Oberbegriff von Anspruch 13.

Ein solches Modul, ein solche Bremsanlage, ein solches Fahrzeug und ein solches Verfahren sind aus DE 102008007877 B bekannt.

Bekannte Bremsanlagen für ein Fahrzeug, insbesondere Nutzfahrzeug, weisen eine Betriebsbremseinrichtung zur Breitstellung einer Betriebsbremsfunktion sowie eine Feststellbremseinrichtung zur Bereitstellung einer Feststellbremsfunktion auf.

Aus DE 103 36 611 A1 ist eine druckluftbetriebene Bremsanlage bekannt, bei der mittels der Betriebsbremsfunktion Membranteile von Bremszylindern mit einem Betriebsbremsdruck belüftbar sind, wobei dieser Betriebsbremsdruck entsprechend einem Fahrerwunsch aussteuerbar ist. Die Feststellbremsfunktion hingegen erfordert eine Entlüftung von Federspeicherteilen von Bremszylindern, insbesondere von kombinierten Federspeicher-/Membranzylindern, wobei die Entlüftung für einen aussteuerbaren Feststellbremsdruck sorgt.

Dabei unterscheidet sich ein kombinierter Federspeicher-/Membranzylinder dadurch von einem einfachen Betriebszylinder, dass der Bremszylinder lediglich zum Betätigen der Betriebsbremse dient. Der kombinierte Federspeicher-/Membranzylinder weist neben einen Membranteil für die Betriebsbremse einen Federspeicherteil für die Feststellbremse auf. Ist der Federspeicherteil entlüftet, legt eine Speicherfeder die Feststellbremse ein, wodurch das Fahrzeug auch im drucklosen Zustand sicher gehalten wird. Zum Lösen der Feststellbremse wird der Federspeicherteil belüftet und die Bremse gelöst. Das Fahrzeug kann dann über die Betriebsbremse eingebremst werden.

Das Aussteuern der Feststellbremse erfolgt mittels eines Feststellbremsmoduls, welches elektromagnetisch schaltbare Ventile aufweist, die im Falle einer gelösten Feststellbremse bevorzugt unbestromt sind, um einen minimalen Energieverbrauch und eine minimale Wärmeabgabe zu erreichen. Zum Einlegen der Feststellbremse wird mindestens ein elektromagnetisch schaltbares Ventil zum Umschalten seines Schaltzustandes bestromt. Dazu weist das Feststellbremsmodul eine elektronische Steuereinrichtung auf.

Kommt es zu einem Ausfall der elektronischen Komponenten der Feststellbremseinrichtung, wie beispielsweise Steuereinrichtung, Batterie, Spannungsversorgung und/oder Magnetventile oder zu einem Druckabfall im Versorgungsdruck des Feststellbremsmoduls, können die Federspeicherteile der Bremsaktuatoren nicht mehr belüftet werden und somit die Feststellbremse nicht mehr gelöst werden.

Da sich das Fahrzeug jedoch nicht mit eingelegter Feststellbremse abschleppen lässt, sind herkömmlicherweise an den Federspeicherbremszylindern Löseschrauben vorgesehen, mit denen die Feststellbremse notgelöst werden kann. Diese Löseschrauben sind jedoch oft schwer zugänglich, wodurch ein Notlösen der Feststellbremse ein hohes Sicherheitsrisiko darstellt.

Der Erfindung liegt daher die Aufgabe zugrunde, eine Feststellbremseinrichtung mit einer Notlösefunktion sowie ein Verfahren zum Betreiben einer Feststellbremseinrichtung mit einer Notlösefunktion zu schaffen, wobei die Notlösefunktion ohne ein zusätzliches Sicherheitsrisiko für den Fahrer gelöst werden kann.

Die Erfindung löst diese Aufgabe mit einem Feststellbremsmodul mit den Merkmalen gemäß Anspruch 1, mit einer Bremsanlage mit den Merkmalen gemäß Anspruch 11, mit einem Fahrzeug mit den Merkmalen gemäß Anspruch 12 sowie mit einem Verfahren zum Betreiben einer Feststellbremseinrichtung mit den Merkmalen gemäß Anspruch 13.

Das erfindungsgemäße Feststellbremsmodul einer Feststellbremseinrichtung ist derart ausgestaltet, um mindestens einen Bremsaktuator mittels einer Druckmittelbeaufschlagung zu steuern. Bevorzugt ist ein derartiger Bremsaktuator ein Federspeicherbremszylinder oder ein kombinierter Federspeicher-/Membranbremszylinder einer Bremsanlage eines Fahrzeugs, insbesondere Nutzfahrzeug.

In dem Feststellbremsmodul sind eine elektronische Steuereinrichtung, mindestens ein von der Steuereinrichtung betätigbares Magnetventil sowie ein druckmittelmengenverstärkendes Ventil integriert.

Das druckmittelmengenverstärkende Ventil, nachfolgend auch Relaisventil genannt, stellt Druckmittel in größerer Druckmittelmenge bereit. Mit sehr kleinen Druckmittelmengen, die bevorzugt mittels Magnetventile ausgesteuert und über einen Steuereingang dem Relaisventil zugeführt werden, steuert das Relaisventil sehr große Druckmittelmengen, insbesondere zur Ansteuerung der Bremszylinder, wobei das Relaisventil die großen Druckmittelmengen aus einem Druckmittelvorratsbehälter bzw. Druckspeicher bezieht. Zudem weist das Relaisventil einen Druckmittelausgang auf, über welchen Druckmittel wieder abgelassen werden kann.

Das erfindungsgemäße Feststellbremsmodul weist darüber hinaus einen Druckmitteleingang auf, über den das Feststellbremsmodul mit Druckmittel aus einem Druckmittelvorratsbehälter bzw. Druckspeicher versorgt wird sowie einen Notlöse-Druckmittelanschluss und ein Doppelrückschlagventil, wobei das Doppelrückschlagventil derart angeordnet ist, dass es den an dem Steuereingang des Relaisventils anliegenden Druck bestimmt..

In Verbindung mit einem an dem Notlöse-Druckmittelanschluss anliegenden Druck, wird mittels des Notlöse-Druckmittelanschlusses und mittels des Doppelrückschlagventils vorteilhafterweise eine Notlösefunktion der Feststellbremseinrichtung bereitgestellt.

Das Feststellbremsmodul weist ferner eine erste Druckmittelleitung auf, mit der der Notlöse-Druckmittelanschluss über ein Rückschlagventil mit dem Versorgungseingang des druckmittelmengenverstärkenden Ventils derart fluidisch verbunden ist, dass Druckmittel durch diese erste Druckmittelleitung von dem Notlöse-Druckmittelanschluss zu dem druckmittelmengenverstärkenden Ventil strömt, falls der an dem Notlöse-Druckmittelanschluss anliegende Druck größer als der an dem Versorgungseingang des druckmittelmengenverstärkenden Ventils anliegende Druck ist.

Das in dieser ersten Druckmittelleitung angeordnete Rückschlagventil ist derart ausgestaltet, dass es die fluidische Verbindung von dem Versorgungseingang des Relaisventils zum Notlöse-Druckmittelanschluss sperrt.

Die erste und zweite im Anspruch 1 genannten Druckmittelleitungen sind bevorzugt interne Leitungen, die innerhalb des Feststellbremsmoduls angeordnet sind.

Über den Notlöse-Druckmittelanschluss am Feststellbremsmodul kann dem Feststellbremsmodul bei Bedarf Druckmittel zugeführt werden, um somit die Feststellbremse vorteilhafterweise zu lösen, auch wenn die elektronischen Komponenten des Feststellbremsmoduls ausgefallen sind oder dem Feststellbremsmodul kein Versorgungsdruck zur Verfügung steht. Dazu wird dem Relaisventil der über den Notlöse-Druckmittelanschluss anliegende Druck sowohl über den Versorgungseingang als auch über den Steuereingang fluidisch zugeführt.

Gemäß einer Weiterbildung der Erfindung weist das Doppelrückschlagventil zwei Eingänge und einen Ausgang auf, wobei einer der beiden Eingänge stets gesperrt ist und die Durchlassrichtung von einem der Eingänge in Richtung Ausgang verläuft. Das Doppelrückschlagventil stellt eine Select-High-Funktion bereit, welche bewirkt, dass der größere von den an den Eingängen des Doppelrückschlagventils anliegenden Drücken an dem Ausgang des Doppelrückschlagventils ausgebbar ist, indem derjenige Eingang, an dem der größere der an den Eingängen anliegenden Drücke anliegt, mit dem Ausgang des Doppelrückschlagventils verbunden ist. Dadurch wird das druckmittelmengenverstärkende Ventil am Steuereingang vorteilhafterweise stets mit einem benötigten Steuerdruck versorgt, auch wenn über die Magnetventile ein entsprechender Druck nicht bereitgestellt werden kann.

In einer Weiterbildung der Erfindung ist der Ausgang des Doppelrückschlagventils mittels einer Druckmittelleitung unmittelbar mit dem Steuereingang des druckmittelmengenverstärkenden Ventils verbunden, insbesondere derart fluidisch verbunden, dass an dem Ausgang des Doppelrückschlagventils und dem Steuereingang des druckmittelmengenverstärkenden Ventils das gleiche Druckniveau herrscht. Oder der Ausgang des Doppelrückschlagventils ist mittels mindestens einer Druckmittelleitung über mindestens ein Ventil mittelbar mit dem Steuereingang des druckmittelmengenverstärkenden Ventils derart verbunden und/oder der Ausgang des Doppelrückschlagventils ist mittels mindestens einer Druckmittelleitung über mindestens ein Magnetventil mit einem Anhängersteuerventil derart fluidisch verbunden, dass Druckmittel von dem Ausgang des Doppelrückschlagventils zu dem Steuereingang des druckmittelmengenverstärkenden Ventils gelangen kann, wenn die dazwischenliegenden Ventile in ihre Durchlassrichtung geschaltet sind und ein entsprechendes Druckniveau herrscht.

Über die direkte, unmittelbare Verbindung zwischen Doppelrückschlagventil und Steuereingang des druckmittelmengenverstärkenden Ventils kann das druckmittelmengenverstärkende Ventil über den Druckmittelanschluss vorteilhafterweise direkt angesteuert werden. Ist zwischen der Verbindung zwischen Doppelrückschlagventil und Steuereingang des druckmittelmengenverstärkenden Ventils ein weiteres Ventil, insbesondere ein Doppelabsperrventil angeordnet, kann mit dem erfindungsgemäßen Feststellbremsmodul vorteilhafterweise zusätzlich zu einer Notlösefunktion auch eine Noteinbremsfunktion bereitgestellt werden. Bei einer Verbindung des Ausgangs des Doppelrückschlagventils mittels mindestens einer Druckmittelleitung über mindestens ein Magnetventil mit einem Anhängersteuerventil kann vorteilhafterweise die erfindungsgemäße Noteinbremsfunktion auch einem Anhänger bereitgestellt werden.

Eine Weiterbildung der Erfindung sieht vor, dass bei Vorhandensein eines Notlöse-Druckmittelanschluss und eines weiteren Druckmittelanschlusses diese jeweils mit einem Eingang eines weiteren Doppelrückschlagventils diesem verbunden sind. Dieses weitere Doppelrückschlagventil ist derart ausgestaltet, um den größeren von den an den Eingängen anliegenden Drücken an dem Ausgang des Doppelrückschlagventils auszugeben, d.h. dass derjenige Eingang, an dem der größere der an den Eingängen anliegenden Drücke anliegt, mit dem Ausgang des Doppelrückschlagventils verbunden ist.

Durch die Hintereinanderschaltung von zwei Doppelrückschlagventilen ist es vorteilhafterweise möglich aus drei Drücken den jeweils größeren Druck auszugeben. Die Erfindung ist jedoch nicht auf die Verwendung von zwei Doppelrückschlagventilen beschränkt. Sollen aus mehr als drei Drücken der größte Druck ausgewählt werden, können vielmehr weitere Doppelrückschlagventile verwendet werden.

Gemäß einer Weiterbildung der Erfindung ist mit dem Notlöse-Druckmittelanschluss, ein Reifenfüllanschluss verbindbar, mit dem eine Notlösefunktion der Feststellbremseinrichtung bereitstellbar ist. Bei Vorhandensein eines weiteren Druckmittelanschlusses ist bevorzugt ein Betriebsbremsenanschluss mit diesem verbindbar, mit der eine Anti-Compound-Funktion bereitstellbar ist.

Über den Reifenfüllanschluss ist es vorteilhafterweise möglich, dem erfindungsgemäßen Feststellbremsmodul im Notfall von außen über den Notlöse-Druckmittelanschluss Druck zuzuführen, um somit die Feststellbremse zu lösen. Die Erfindung ist jedoch nicht auf eine Verbindung mit dem Reifenfüllanschluss beschränkt. Vielmehr kann jedweder Anschluss mit dem Notlöse-Druckmittelanschluss des Feststellbremsmoduls verbunden werden, mit dem diesem Feststellbremsmodul kontrolliert Druck bereitgestellt werden kann.

Bevorzugt erfolgt die Bereitstellung eines vorbestimmten Druckes besonders komfortabel über einen vom Fahrer betätigbaren Schalter, insbesondere aus der Fahrerkabine heraus. Der Druck kann jedoch auch durch Anschließen einer externen Druckmittelquelle, z.B. von einem Abschleppwagen, bereitgestellt werden.

An einem weiteren Druckmittelanschluss des Feststellbremsmoduls ist besonders vorteilhaft die Betriebsbremse des Fahrzeugs angeschlossen. Dadurch wird eine Anti-Compound-Funktion bereitgestellt, mit der eine Überlastung der mechanischen Bauteile der Radbremse vermieden wird, wenn zusätzlich zu einer eingelegten Feststellbremse die Betriebsbremse betätigt wird.

In einer Weiterbildung der Erfindung weist das Feststellbremsmodul ein Umschaltventil innerhalb der ersten Druckmittelleitung auf, wobei das Umschaltventil einen Anschluss aufweist, welcher mit dem Notlöse-Druckmittelanschluss verbunden ist, und einen weiteren Anschluss aufweist, welcher über das Rückschlagventil mit dem Versorgungseingang des druckmittelmengenverstärkenden Ventils verbunden ist.

Ein derartiges Umschaltventil ist als Sicherheit für den Fall vorgesehen, dass das Rückschlagventil in der ersten Druckmittelleitung eine Leckage aufweist. Wenn über das Rückschlagventil kleinste Druckmittelmengen auf den Steuereingang des druckmittelmengenverstärkenden Ventils gelangen, steigt der Druck an dem Steuereingang langsam an und bewegt dann den Kolben des druckmittelmengenverstärkenden Ventils, wodurch die Feststellbremse ungewollt belüftet wird. Um dies zu vermeiden, wird in die erste Druckmittelleitung ein Umschaltventil gesetzt, welches im störungsfreien Betrieb des Feststellbremsmoduls die Druckmittelleitung zwischen dem Rückschlagventil und dem Druckmittelanschluss sperrt. Das Umschaltventil wird über einen anliegenden Druck geschaltet, wobei der Druck aus dem Druckmittelvorratsbehälter bzw. Druckspeicher, welcher mit dem Feststellbremsmodul verbunden ist, an dem Umschaltventil anliegt. Sinkt der Druck aus dem Druckmittelvorratsbehälter bzw. Druckspeicher unter einen vorbestimmten Schwellenwert, wird das Umschaltventil in seinen zweiten Zustand geschaltet, bei dem der Druckmittelanschluss mit dem Rückschlagventil verbunden wird. Somit kann das druckmittelmengenverstärkende Ventil vorteilhafterweise bei einem Druckabfall des Vorratsdruckes bzw. Speicherdruckes mit Druckmittel über den Versorgungseingang des druckmittelmengenverstärkenden Ventils von dem Notlöse-Druckmittelanschluss mit Druckmittel versorgt werden.

Gemäß einer Weiterbildung der Erfindung weist das Feststellbremsmodul ein Doppelabsperrventil und einen weiteren Druckmittelanschluss auf, mit denen zusätzlich zu der erfindungsgemäßen Notlösefunktion der Feststellbremseinrichtung eine Noteinbremsfunktion der Feststellbremseinrichtung bereitstellbar ist. Dazu weist das Doppelabsperrventil zwei Eingänge und einen Ausgang auf, wobei der kleinere der an den Eingängen anliegenden Drücke an dem Ausgang des Doppelabsperrventils ausgebbar ist, indem derjenige Eingang, an dem der kleinere der an den Eingängen anliegenden Drücke anliegt, mit dem Ausgang verbunden ist, und wobei der Ausgang des Doppelabsperrventils mit dem Steuereingang des druckmittelmengenverstärkenden Ventils verbunden ist. Ferner ist der weitere Druckmittelanschluss über einen der zwei Eingänge des Doppelabsperrventils mit dem Steuereingang des druckmittelmengenverstärkenden Ventils fluidisch verbunden, falls der an dem Druckmittelanschluss anliegende Druck geringer ist als der an dem Ausgang des Doppelrückschlagventils anliegende Druck.

Dadurch ist das erfindungsgemäße Feststellbremsmodul derart ausgestaltet, um eine Feststellbremseinrichtung bereitzustellen, die im Falle einer Störung, wie z.B. Ausfall der elektronischen Steuereinrichtung, der Batterie, der Spannungsversorgung und/oder der Magnetventile, das Fahrzeug dennoch sicher einbremsen kann.

In einer Weiterbildung der Erfindung ist an dem weiteren Druckmittelanschluss ein 2/2-Wege-Ventil, ein 3/2-Wege-Ventil oder eine externe Ventillogik an dem Feststellbremsmodul angeschlossen, welche beabstandet zum Feststellbremsmodul, insbesondere innerhalb der Fahrerkabine, angeordnet ist. Bevorzugt ist das an dem weiteren Druckmittelanschluss angeschlossene Ventil ein handbetätigbares Ventil. Die erfindungsgemäße Noteinbremsfunktion lässt sich somit vorteilhafterweise besonders komfortabel für den Fahrer einlegen.

Gemäß einer Weiterbildung der Erfindung sind der Druckmitteleingang des Feststellbremsmoduls und/oder der oder die Druckmittelanschlüsse jeweils mit einem Partikelfilter versehen. Durch den feinmaschigen Partikelfilter wird vorteilhafterweise ein Eindringen von Schmutzpartikeln in das Feststellbremsmodul vermieden.

Bei dem erfindungsgemäßen Feststellbremsmodul können mindestens zwei, drei oder mehr der vorstehend beschriebenen Weiterbildungen miteinander kombiniert werden, um im Rahmen der Erfindung sinnvolle Merkmalskombinationen zu erhalten.

Ferner wird die o.g. Aufgabe mittels einer Bremsanlage mit einer Feststellbremseinrichtung gelöst, wobei die Bremsanlage mindestens ein vorstehend beschriebenes Feststellbremsmodul aufweist, mit einem Notlöse-Druckmittelanschluss und einem Doppelrückschlagventil, welche derart ausgestaltet sind, dass sie in Verbindung mit einem an dem Notlöse-Druckmittelanschluss anliegenden Druck eine Notlösefunktion der Feststellbremseinrichtung bereitstellen.

Die o.g. Aufgabe wird außerdem mittels eines Fahrzeugs, insbesondere Nutzfahrzeugs, gelöst, wobei das Fahrzeug mindestens ein vorstehend beschriebenes Feststellbremsmodul und/oder mindestens eine o.g. Bremsanlage aufweist.

Schließlich wird die o.g. Aufgabe mittels eines Verfahrens zum Betreiben einer Feststellbremseinrichtung gemäß Anspruch 13 gelöst.

Ein derartiges Verfahren zum Betreiben einer Feststellbremseinrichtung ermöglicht vorteilhafterweise ein Lösen der eingelegten Feststellbremse bei einem Ausfall der elektronischen Komponenten und/oder des Versorgungsdruckes, wobei die Feststellbremse mittels der Notlösefunktion ohne ein zusätzliches Sicherheitsrisiko für den Fahrer gelöst werden kann. Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Darstellung einer Feststellbremseinrichtung mit einer Notlösefunktion gemäß eines Ausführungsbeispiels,
- Fig. 2: eine schematische Darstellung einer Feststellbremseinrichtung mit einer Notlösefunktion und einer Anti-Compound-Funktion gemäß eines weiteren Ausführungsbeispiels,
- Fig. 3: eine schematische Darstellung einer Feststellbremseinrichtung mit einer Notlösefunktion für das Anhängersteuerventil gemäß eines weiteren Ausführungsbeispiels,
- Fig. 4: eine schematische Darstellung einer Feststellbremseinrichtung mit einer Notlösefunktion und einem Umschaltventil in einem ersten Schaltzustand gemäß eines weiteren Ausführungsbeispiels,
- Fig. 5: eine schematische Darstellung einer Feststellbremseinrichtung mit einer Notlösefunktion und einem Umschaltventil in einem zweiten Schaltzustand gemäß eines weiteren Ausführungsbeispiels,
- Fig. 6: eine schematische Darstellung einer Feststellbremseinrichtung mit einer Notlösefunktion und einer Noteinbremsfunktion mit einem 2/2-Wege-Ventil gemäß eines weiteren Ausführungsbeispiels und
- Fig. 7: eine schematische Darstellung einer Feststellbremseinrichtung mit einer Notlösefunktion und einer Noteinbremsfunktion mit einem 3/2-Wege-Ventil gemäß eines weiteren Ausführungsbeispiels.

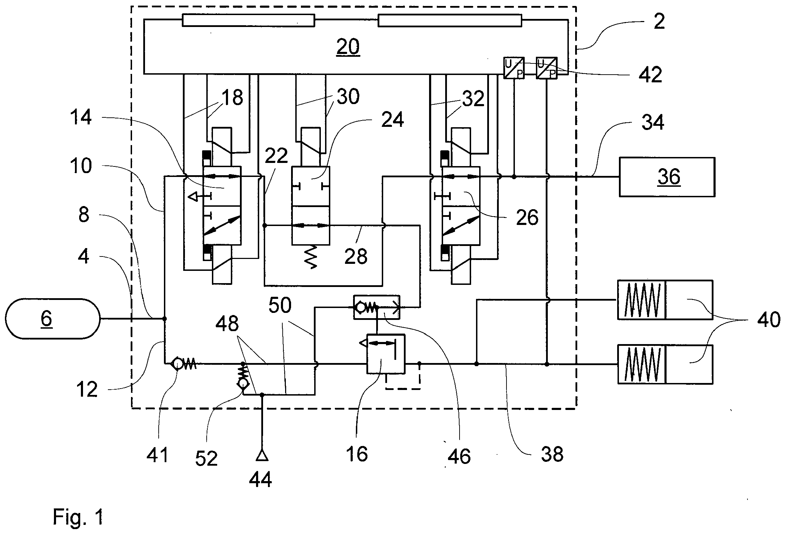

Fig. 1 zeigt eine schematische Darstellung einer erfindungsgemäßen Feststellbremseinrichtung einer Bremsanlage eines Fahrzeugs, insbesondere Nutzfahrzeugs. Bevorzugt handelt es sich bei der dargestellten Bremsanlage um eine druckluftbetriebene Bremsanlage mit einer elektropneumatischen Feststellbremseinrichtung. Demzufolge ist das verwendete Druckmittel Luft, die von einem hier nicht dargestellten Kompressor im Fahrzeug bereitgestellt und einem Feststellbremsmodul 2 übergeben wird.

Die nachfolgenden Erläuterungen können jedoch auch analog für eine Bremsanlage mit einer elektrohydraulischen Feststellbremseinrichtung umgesetzt werden. In diesem Fall ist das Druckmittel eine Flüssigkeit, bevorzugt ein Hydrauliköl.

Zum elektropneumatischen Aussteuern eines Feststelldrucks weist das erfindungsgemäße Feststellbremsmodul 2 einen Druckmitteleingang 4, insbesondere Belüftungseingang, auf, über den Druckluft aus einem Druckluftvorratsbehälter 6 über eine Druckluftleitung 8 dem Feststellbremsmodul 2 bereitgestellt wird. Druckluftleitungen 10 und 12 führen diese Druckluft an ein erstes Magnetventil 14 und an ein luftmengenverstärkendes Ventil 16, auch Relaisventil genannt.

Das erste Magnetventil 14 ist als ein 3/2-Wege-Bistabilmagnetventil ausgebildet und in zwei Schaltzuständen schaltbar. Zum Schalten des Magnetventils 14 wird dieses Magnetventil 14 über elektrische Leitungen 18 von einer elektronischen Steuereinheit 20 angesteuert. Ein derartiges Bistabilventil hat den Vorteil, dass es auch im Falle eines Stromausfalls in dem jeweiligen Schaltzustand verharrt, wodurch ein ungewolltes Einlegen oder Lösen der Feststellbremse verhindert wird.

In dem in Fig. 1 dargestellten Schaltzustand wird die Druckluftleitung 10 pneumatisch mit einer Druckluftleitung 22 verbunden, die einem zweiten Magnetventil 24 und einem dritten Magnetventil 26 Druckluft zuführt. Das zweite Magnetventil 24 ist ein 2/2-Wege-Magnetventil, wobei der bestromte Schaltzustand gegen die Kraft einer Feder für die Dauer der Bestromung aufrechterhalten wird. Dazu ist das Magnetventil 24 über elektrische Leitungen 30 mit der elektronischen Steuereinheit 20 verbunden. Mittels des ersten Magnetventils 14 und des zweiten Magnetventils 24 kann ein Druck in einer Druckluftleitung 28 ausgesteuert werden.

Das dritte Magnetventil 26 ist ebenfalls ein 3/2-Wege-Bistabilmagnetventil und über elektrische Leitungen 32 mit der elektronischen Steuereinheit 20 verbunden. Dieses Magnetventil 26 ist über eine weitere Druckluftleitung 34 mit einem Anhängersteuerventil 36 pneumatisch verbunden. Dadurch ist die Feststellbremseinrichtung zum Einsatz in einem Zugfahrzeug geeignet, wobei an dem Zugfahrzeug ein Anhänger angekoppelt werden kann.

Alternativ zu dem hier gezeigten Ausführungsbeispiel kann das dritte Magnetventil 26 auch als 2/2-Wege-Magnetventil ausgebildet sein, dessen bestromter Schaltzustand gegen die Kraft einer Feder für die Dauer der Bestromung aufrechterhalten wird.

Mittels des Relaisventils 16 wird in einer weiteren Druckluftleitung 38 Druckluft mit einem ausgesteuerten Feststellbremsdruck mehreren Bremsaktuatoren 40 des Bremssystems bereitgestellt. Dazu ist das Relaisventil 16 über die Druckluftleitung 12 über ein Rückschlagventil 41 mit dem Druckluftvorratsbehälter 6 verbunden. Die ausgegebene Druckluft in der Druckluftleitung 38 entspricht einer Verstärkung des über einen Steuereingang des Relaisventils 16 anliegenden Steuerdrucks und wird den Bremsaktuatoren 40 zugeführt.

Als Bremsaktuatoren 40 weist die Bremsanlage des Fahrzeugs Federspeicherbremszylinder oder kombinierte Federspeicher-/Membranzylinder auf, die mit dem am Feststellbremsmodul 2 anliegenden Vorratsdruck beaufschlagbar sind. Sind die Bremsaktuatoren 40 mit einem ausreichenden Druck beaufschlagt, ist die Feststellbremse gelöst. Andernfalls ist die Feststellbremse aufgrund der vorgespannten Feder in dem Federspeicherbremszylinder bzw. kombinierten Federspeicher-/Membranzylinder eingelegt. Eine Betätigung der Feststellbremse mittels der Feder der Federspeicherbremszylinder bzw. kombinierten Federspeicher-/Membranzylinder eignet sich besonders zum Abstellen des Fahrzeugs, da die Feststellbremse somit auch bei einem auftretenden Druckverlust allein aufgrund der Federkraft eingelegt bleibt.

Das erfindungsgemäße Feststellbremsmodul 2 weist ferner Drucksensiermittel 42 auf, mit denen der Druck innerhalb der Druckmittelleitungen 34, 38 ermittelbar ist. Bevorzugt ist der Druck nach Maßgabe des Drucksensiermittels 42 aussteuerbar. Dazu sind die Drucksensiermittel 42 bevorzugt mit der elektronischen Steuereinheit 20 zum Empfangen von Messwerten verbunden.

Um eine Feststellbremseinrichtung mit einer Notlösefunktion der Feststellbremse zu schaffen, bei der ein komfortables und sicheres Lösen der Feststellbremse ermöglicht wird, weist das erfindungsgemäße Feststellbremsmodul 2 einen Notlöse-Druckmittelanschluss 44 und ein Doppelrückschlagventil 46, ein sog. Select-High-Ventil, auf, mit denen bei einem an dem Notlöse-Druckmittelanschluss 44 anliegenden, ausreichenden Druck die Notlösefunktion bereitgestellt wird.

Das Doppelrückschlagventil 46 bewirkt, dass stets der größere von den an den Eingängen des Doppelrückschlagventils 46 anliegenden Drücken an dem Ausgang des Doppelrückschlagventils 46 ausgegeben wird.

Für die Notlösefunktion der Feststellbremseinrichtung wird über den Notlöse-Druckmittelanschluss 44 Druckluft, z.B. von einem Reifenfüllanschluss oder über einen pneumatischen Schlauchanschluss aus einer externen Druckmittelquelle, über eine erste Druckmittelleitung 48 dem Versorgungseingang des Relaisventils 16 zugeführt. Über diese erste Druckmittelleitung 48 kann den Federspeicherbremszylindern bzw. kombinierten Federspeicher-/Membranzylindern 40 auch dann Druckluft zugeführt werden, wenn aufgrund einer Störung, z.B. eines Lecks, keine Druckluft von dem Vorratsbehälter 6 dem Feststellbremsmodul 2 zur Verfügung steht.

Über eine zweite Druckmittelleitung 50 wird die an dem Notlöse-Druckmittelanschluss 44 anliegende Druckluft auf einen Eingang des Doppelrückschlagventils 46 gegeben. Ist dieser Druck größer als der über die Druckmittelleitung 28 anliegende Druck des Magnetventils 24, wird dieser Druck an dem Ausgang des Doppelrückschlagventils 46 ausgegeben und als Steuerdruck dem Relaisventil 16 zugeführt. Das Relaisventil 16 wird somit im Falle einer Störung, z.B. einem Ausfall der elektronischen Komponenten des Feststellbremsmoduls 2, über den Notlöse-Druckmittelanschluss 44 gesteuert.

Ein in der ersten Druckmittelleitung 48 angeordnetes Rückschlagventil 52 sorgt dafür, dass im Normalbetrieb keine Vorratsdruckluft über die Druckmittelleitung 12 ungewollt in die Druckmittelleitung 50 gelangt und somit als Steuerdruck dem Relaisventil 16 zugeführt wird.

Das Rückschlagventil 41 sorgt hingegen während der Notlösefunktion der Feststellbremseinrichtung dafür, dass die über den Notlöse-Druckmittelanschluss 44 anliegende Druckluft nicht über ein eventuell vorhandenes Leck in der Druckmittelleitung 12 oder dem Vorratsbehälter 6 entweichen kann, sondern vollständig dem Relaisventil 16 als Vorratsdruck zugeführt wird.

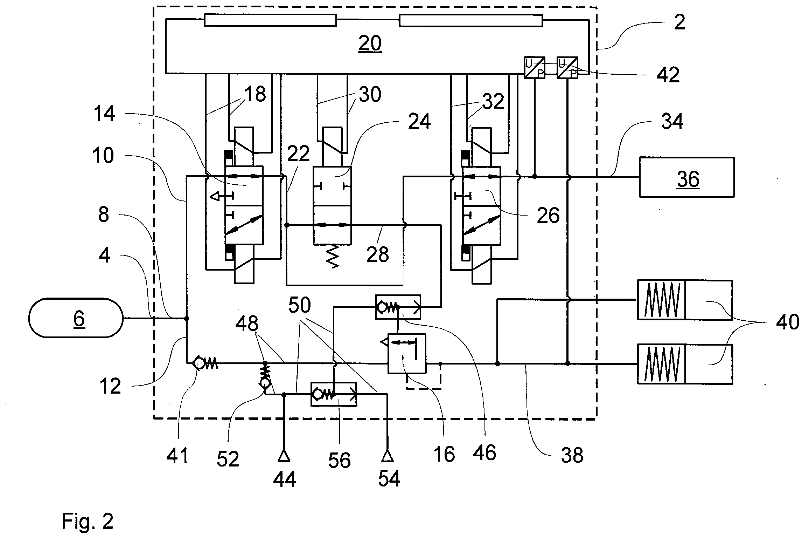

Fig. 2 zeigt eine schematische Darstellung einer Feststellbremseinrichtung mit einer Notlösefunktion und einer Anti-Compound-Funktion, wobei sich diese Feststellbremseinrichtung zu großen Teilen der Feststellbremseinrichtung gemäß Fig. 1 gleicht. Insofern bezeichnen gleiche Bezugsziffern auch gleiche Bauteile und es wird auf die entsprechenden obigen Ausführungen verwiesen.

Zusätzlich zu der vorstehend beschriebenen Notlösefunktion weist diese Feststellbremseinrichtung eine Anti-Compound-Funktion auf, mit der eine Überlastung der mechanischen Komponenten der Radbremse vermieden wird. Zur Bereitstellung dieser Anti-Compound-Funktion wird über einen weiteren Druckmittelanschluss 54 dem Feststellbremsmodul 2 der Druck der Betriebsbremse des Fahrzeugs übergeben.

Bei Betätigung der Betriebsbremse wird dieser Betriebsbremsdruck über den Druckmittelanschluss 54 einem weiteren Doppelrückschlagventil 56 zugeführt, welches ebenfalls, wie das vorstehend beschriebene Doppelrückschlagventil 46 ausgebildet ist und als Select-High-Ventil stets den größeren der an den Eingängen anliegenden Drücke ausgibt, wobei der ausgegebene Druck über die zweite Druckmittelleitung 50 dem Doppelrückschlagventil 46 zugeführt wird.

Wird die Betriebsbremse betätigt, gelangt dieser Betriebsbremsdruck über die Doppelrückschlagventile 56, 46 auf den Steuereingang des Relaisventils 16 und sorgt dafür, dass die Federspeicherbremszylinder bzw. kombinierten Federspeicher-/Membranzylinder 40 belüftet werden und somit die Feststellbremse gelöst wird. Somit wird vorteilhafterweise eine Überlastung vermieden, indem die Feststellbremse und die Betriebsbremse nicht gleichzeitig auf die Federspeicherbremszylinder bzw. kombinierten Federspeicher-/Membranzylinder 40 wirken können.

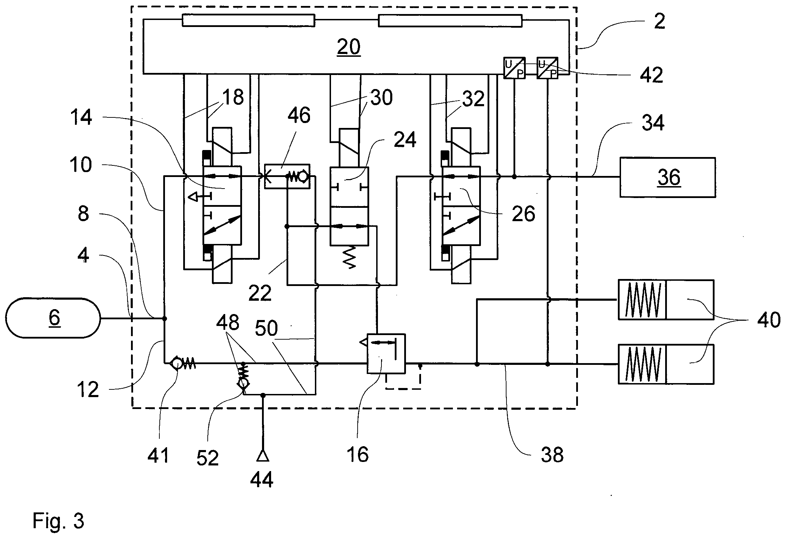

Fig. 3 zeigt eine schematische Darstellung einer Feststellbremseinrichtung mit einer Notlösefunktion der Feststellbremse für das Anhängersteuerventil 36. Auch hier bezeichnen gleiche Bezugsziffern auch gleiche Bauteile und es wird auf die obigen Ausführungen verwiesen, da sich die Feststellbremseinrichtungen zu großen Teilen gleichen.

Um die Notlösefunktion der Feststellbremseinrichtung auch einem eventuell angekoppelten Anhänger zur Verfügung zu stellen, wird die an dem Notlöse-Druckmittelanschluss 44 anliegende Druckluft über die zweite Druckmittelleitung 50 einem Eingang des Doppelrückschlagventils 46 zugeführt. Der weitere Eingang des Doppelrückschlagventils 46 ist direkt mit dem Ausgang des Magnetventils 14 verbunden.

Bei einem störungsfreien Betrieb der Feststellbremseinrichtung wird das Magnetventil 14 über die elektronische Steuereinrichtung 20 angesteuert und gibt einen entsprechenden Druck auf das Doppelrückschlagventil 46. Dieser Druck wird dann über den Ausgang des Doppelrückschlagventils 46 über die Druckluftleitung 22 über das Magnetventil 24 dem Steuereingang des Relaisventils 16 zugeführt und über die Druckluftleitung 22 und dem Magnetventil 26 über die Druckluftleitung 34 dem Anhängersteuerventil 36 zugeführt.

Im Falle einer Störung wird von dem Doppelrückschlagventil 46 der an der zweiten Druckmittelleitung 50 anliegende Druck ausgegeben und wie vorstehend ausgeführt dem Anhängersteuerventil 36 und dem Relaisventil 16 zugeführt, so dass entsprechend dem anliegenden Druck die Feststellbremse notgelöst werden kann.

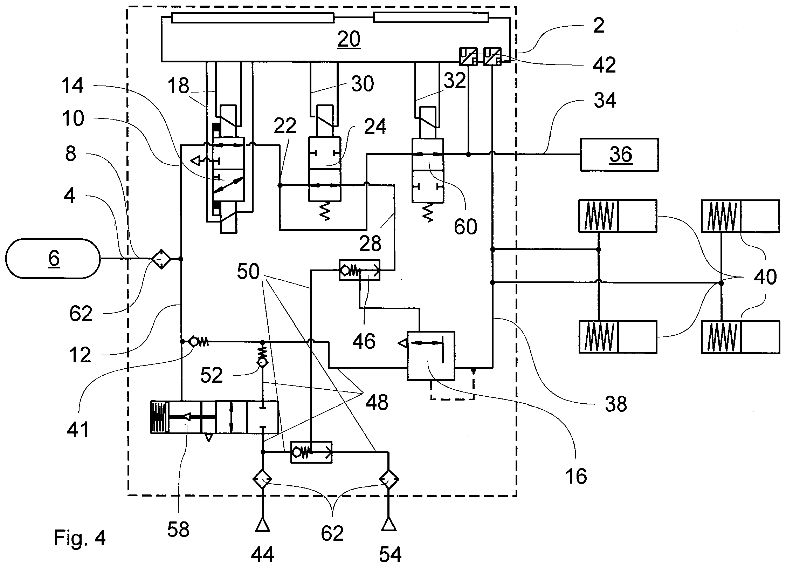

Fig. 4 zeigt eine schematische Darstellung einer Feststellbremseinrichtung mit einer Notlösefunktion und einer Anti-Compound-Funktion mit einem zusätzlichen Umschaltventil 58. Die Bauteile, die bereits in den vorhergehenden Fig. 1 bis 3 beschrieben wurden, erhalten auch hier gleiche Bezugsziffern.

Das dritte Magnetventil 60 ersetzt das in den vorhergehenden Fig. 1 bis 3 verwendete Bistabilmagnetventil 26 und entspricht einer alternativen Ausführungsform, wobei der bestromte Schaltzustand des Magnetventils 60 gegen die Kraft einer Feder für die Dauer der Bestromung aufrechterhalten wird.

Ferner sind an dem Druckmitteleingang 4 und den Druckmittelanschlüssen 44, 54 Partikelfilter 62 vorgesehen, um ein Eindringen von Schmutzpartikeln in das Feststellbremsmodul 2 zu verhindern.

Das Umschaltventil 58 ist ein pneumatisch gesteuertes 2/2-Wege-Ventil mit einem ersten, hier dargestellten Schaltzustand, bei dem die Druckluftleitung zwischen dem Notlöse-Druckmittelanschluss 44 und dem Rückschlagventil 52 unterbrochen ist, und einem zweiten Schaltzustand zum Verbinden dieser Druckluftleitung.

Ein derartiges Umschaltventil 58 dient der Sicherheit der Feststellbremseinrichtung für den Fall, dass das Rückschlagventil 52 eine Leckage aufweist. Bei einer Undichtigkeit in diesem Rückschlagventil 52 kann es über die Doppelrückschlagventile 56, 46 zu einer ungewollten Druckbeaufschlagung am Steuereingang des Relaisventils 16 kommen, wodurch die Feststellbremse ungewollt belüftet werden würde. Um dies zu vermeiden, befindet sich in der ersten Druckmittelleitung 48 vor dem Rückschlagventil 52 das Umschaltventil 58, welches im störungsfreien Betrieb der Feststellbremseinrichtung die Druckluftleitung 48 zwischen dem Rückschlagventil 52 und dem Notlöse-Druckmittelanschluss 44 sperrt.

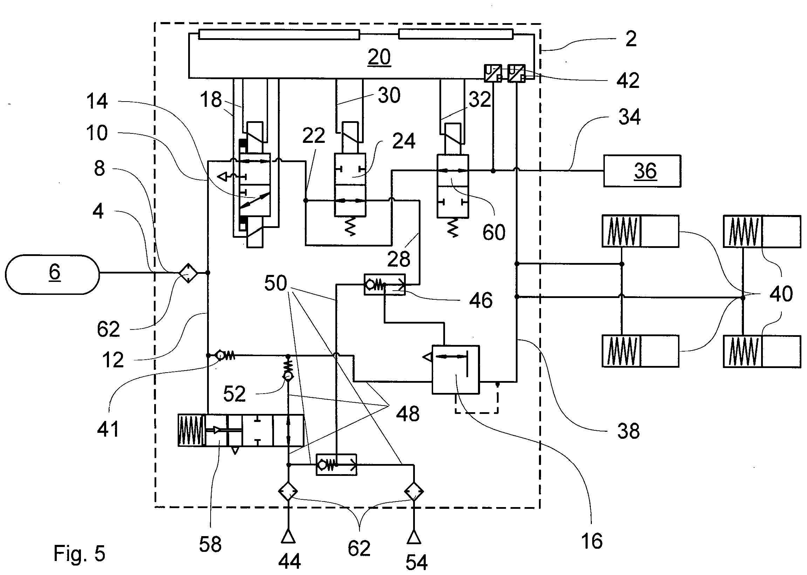

Fig. 5 zeigt eine schematische Darstellung einer Feststellbremseinrichtung gemäß Fig. 4, bei der das Umschaltventil 58 in seinem zweiten Schaltzustand die erste Druckmittelleitung 48 verbindet.

Dazu wird das Umschaltventil 58 über den anliegenden Druck aus dem Vorratsbehälter 6 geschaltet. Fällt der anliegende Druck des Vorratsbehälters 6, z.B. durch eine Leckage, unter einen vorbestimmten Schwellenwert, schaltet das Umschaltventil 58 in seinen Durchlasszustand und das Relaisventil 16 wird mit Druckluft über den Notlöse-Druckmittelanschluss 44 oder einem weiteren Druckmittelanschluss 54 versorgt, je nachdem, welcher der anliegenden Drücke größer ist.

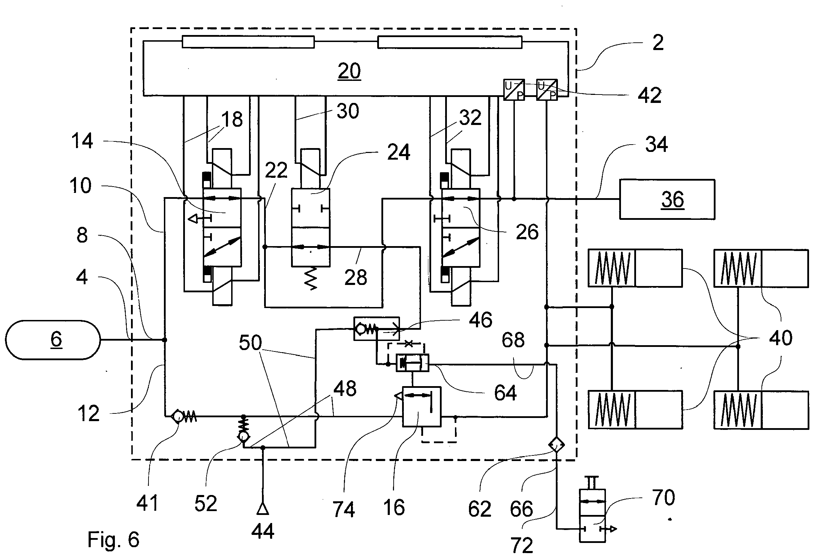

Fig. 6 zeigt eine schematische Darstellung einer Feststellbremseinrichtung mit einer Notlöse- und einer Noteinbremsfunktion, wobei zur Beschreibung der Notlösefunktion auf die vorstehenden Ausführungen verwiesen wird. Daher haben auch gleiche Bauteile gleiche Bezugsziffern, wie in den vorhergehenden Fig. 1 bis 5.

Die Noteinbremsfunktion der Feststellbremseinrichtung wird mittels eines Doppelabsperrventils 64 und eines weiteren Druckmittelanschlusses 66 bereitgestellt.

Das Doppelabsperrventil 64 weist zwei pneumatische Eingänge und einen pneumatischen Ausgang auf und besitzt eine Select-Low-Funktion, bei der der kleinere der an den Eingängen anliegenden Drücke an dem Ausgang ausgegeben wird.

Dabei ist ein Eingang des Doppelabsperrventils 64 mit dem Ausgang des Doppelrückschlagventils 46 verbunden und der andere Eingang des Doppelabsperrventils 64 mit dem weiteren Druckmittelanschluss 66 des Feststellbremsmoduls 2. Um das Eindringen von Schmutzpartikeln über den weiteren Druckmittelanschluss 66 in eine Druckluftleitung 68 des Feststellbremsmoduls 2 zu vermeiden, ist an dem Druckmittelanschluss 66 ein Partikelfilter 62 vorgesehen.

Die Noteinbremsfunktion der Feststellbremseinrichtung wird vom Fahrer des Fahrzeugs aus durch Betätigung eines außerhalb des Feststellbremsmoduls 2 angeordneten handbetätigbaren 2/2-Wege-Ventils 70 eingeleitet. Das 2/2-Wege-Ventil 70 ist über eine Druckluftleitung 72 mit dem Feststellbremsmodul 2 verbunden, insbesondere über einen weiteren Druckmittelanschluss 66.

Bei Betätigung schaltet das Ventil 70 von einem Schaltzustand, bei dem die Druckluftleitung 72 abgesperrt ist, in einen anderen Schaltzustand, bei dem die Druckluftleitung 72 zur Atmosphäre hin entlüftet ist.

Ist die Druckluftleitung 72 entlüftet, liegt folglich an dem Eingang des Doppelabsperrventils 64 ein geringerer Druck als an dem anderen Eingang an und das Doppelabsperrventil 64 öffnet die Verbindung zwischen dem Eingang mit dem geringeren anliegenden Druck und dem Ausgang. Dadurch liegt an dem Steuereingang des Relaisventils 16 nunmehr der Atmosphärendruck an und die Bremsaktuatoren 40 werden über das Relaisventil 16 entlüftet. Dazu weist das Relaisventil 16 eine pneumatische Entlüftung 74 auf.

Bei einer elektrohydraulischen Feststellbremseinrichtung würde die Entlüftung 74 zur Atmosphäre hin einem Auffangen der Hydraulikflüssigkeit in einem Tank entsprechen.

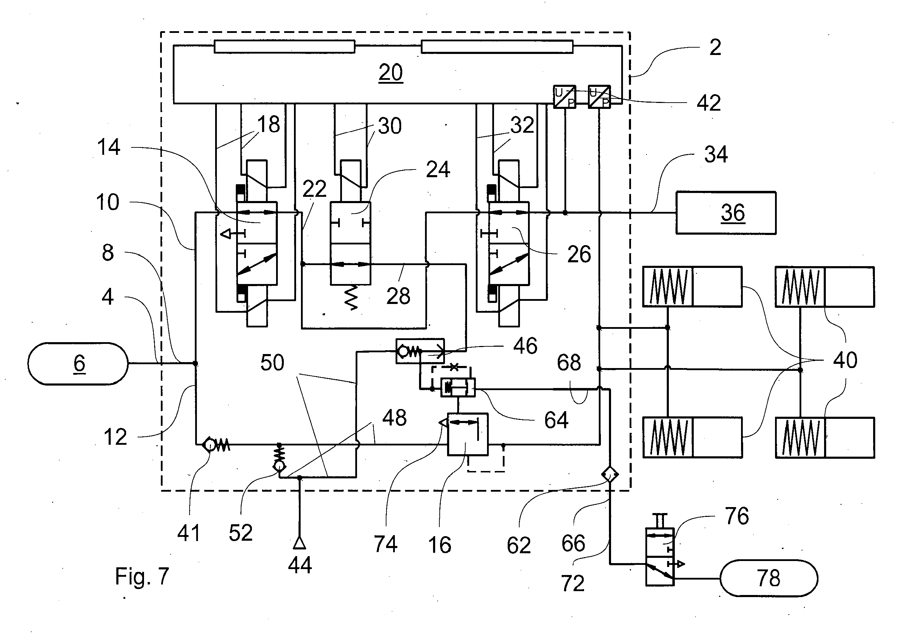

Fig. 7 zeigt eine schematische Darstellung einer Feststellbremseinrichtung mit einer Noteinbremsfunktion gemäß Fig. 6, wobei die Noteinbremsfunktion statt durch ein 2/2-Wege-Ventil 70 durch ein 3/2-Wege-Ventil 76, insbesondere handbetätigbares 3/2-Wege-Ventil, bereitgestellt wird. Über eine Druckluftleitung 72 ist dieses Ventil 76 mit dem Feststellbremsmodul 2 verbunden, wobei dem 3/2-Wege-Ventil 76 über einen Anschluss Vorratsdruckmittel aus einem Vorratsdruckbehälter 78 zuführbar ist. Im Falle einer Störung, wie z.B. Ausfall der elektronischen Komponenten des Feststellbremsmoduls 2, kann mittels des 3/2-Wege-Ventils 76 die Feststellbremse eingelegt werden. Dazu weist das 3/2-Wege-Ventil 76 einen ersten Schaltzustand auf, bei dem die an dem Druckmittelanschluss 66 angeschlossene Druckluftleitung 72 mit dem Vorratsdruckbehälter 78 verbunden ist und einen zweiten Schaltzustand, bei dem die an dem Druckmittelanschluss 66 angeschlossene Druckluftleitung 72 zur Atmosphäre hin geöffnet ist. In diesem zweiten Schaltzustand werden somit über das Relaisventil 16 die Bremsaktuatoren 40 entlüftet und die Feststellbremse des Fahrzeugs eingelegt.

Mit der vorstehend beschriebenen Noteinbremsfunktion ist vorteilhafterweise ein besonders komfortables Einlegen der Feststellbremse bei einem Ausfall der elektronischen Komponenten möglich, da das handbetätigbare 2/2-Wege-Ventil 68 bzw. 3/2-Wege-Ventil 76 bevorzugt von der Fahrerkabine des Fahrzeugs aus betätigt werden kann.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen sondern lediglich durch den Gegenstand der anhängenden Ansprüche beschränkt.

## Patentansprüche

1. Feststellbremsmodul einer Feststellbremseinrichtung, mit dem eine Druckmittelbeaufschlagung mindestens eines Bremsaktuators (40) steuerbar ist, wobei das Feststellbremsmodul (2) eine elektronische Steuereinrichtung (20), mindestens ein von der Steuereinrichtung (20) betätigbares Magnetventil (14), ein druckmittelmengenverstärkendes Ventil (16) zur Druckmittelbeaufschlagung des mindestens einen Bremsaktuators (40) und mindestens einen Druckmitteleingang (4), über den dem Feststellbremsmodul (2) Druckmittel zuführbar ist, aufweist,
wobei das Feststellbremsmodul (2) einen Notlöse-Druckmittelanschluss (44) und ein Doppelrückschlagventil (46) mit zwei Eingängen und einem Ausgang aufweist,
**dadurch gekennzeichnet, dass**
das Feststellbremsmodul (2) eine erste Druckmittelleitung (48) aufweist, mit der der Notlöse-Druckmittelanschluss (44) über ein Rückschlagventil (52) mit dem Versorgungseingang des druckmittelmengenverstärkenden Ventils (16) derart fluidisch verbunden ist, dass Druckmittel durch diese erste Druckmittelleitung (48) von dem Notlöse-Druckmittelanschluss (44) zu dem druckmittelmengenverstärkenden Ventil (16) strömt, falls der an dem Notlöse-Druckmittelanschluss (44) anliegende Druck größer als der an dem Versorgungseingang des druckmittelmengenverstärkenden Ventils (16) anliegende Druck ist, und
das Feststellbremsmodul (2) eine zweite Druckmittelleitung (50) aufweist, über die der Notlöse-Druckmittelanschluss (44) oder ein weiterer Druckmittelanschluss (54) des Feststellbremsmoduls (2) mit einem ersten Eingang des Doppelrückschlagventils (46) derart fluidisch verbunden ist, dass Druckmittel durch diese zweite Druckmittelleitung (50) von dem Notlöse-Druckmittelanschluss (44) zu dem Doppelrückschlagventil (46) strömt, falls der an dem Notlöse-Druckmittelanschluss (44) anliegende Druck größer als der an dem zweiten Eingang des Doppelrückschlagventils (46) anliegende Druck ist oder dass Druckmittel durch diese zweite Druckmittelleitung (50) von dem weiteren Druckmittelanschluss (54) zu dem Doppelrückschlagventil (46) strömt, falls der an dem weiteren Druckmittelanschluss (54) anliegende Druck größer als der an dem zweiten Eingang des Doppelrückschlagventils (46) anliegende Druck und größer als der an dem Notlöse-Druckmittelanschluss (44) anliegende Druck ist.

2. Feststellbremsmodul nach Anspruch 1,
**dadurch gekennzeichnet, dass**
das Doppelrückschlagventil (46) zwei Eingänge und einen Ausgang aufweist und eine Select-High-Funktion bereitstellt, wobei das Doppelrückschlagventil (46) derart ausgebildet ist, dass derjenige Eingang, welcher den größeren Druck aufweist, mit dem Ausgang des Doppelrückschlagventils (46) verbunden ist.

3. Feststellbremsmodul nach Anspruch 2,
**dadurch gekennzeichnet, dass**
der Ausgang des Doppelrückschlagventils (46) mittels einer Druckmittelleitung unmittelbar mit dem Steuereingang des druckmittelmengenverstärkenden Ventils (16) verbunden ist oder
der Ausgang des Doppelrückschlagventils(46) mittels mindestens einer Druckmittelleitung (22) über mindestens ein Ventil (24) mittelbar mit dem Steuereingang des druckmittelmengenverstärkenden Ventils (16) verbunden ist und/oder
der Ausgang des Doppelrückschlagventils (46) mittels mindestens einer Druckmittelleitung (22) über mindestens ein Magnetventil (26) mit einem Anhängersteuerventil (36) verbunden ist.

4. Feststellbremsmodul nach einem der vorhergehenden Ansprüche, **dadurch gekennzeichnet, dass**
beim Vorhandensein eines Notlöse-Druckmittelanschlusses (44) und eines weiteren Druckmittelanschlusses (54) diese jeweils mit einem Eingang eines weiteren Doppelrückschlagventils (56) verbunden sind, wobei das weitere Doppelrückschlagventil (56) derart ausgebildet ist, dass derjenige Eingang, an dem der größere der an den Eingängen anliegenden Drücken anliegt, mit dem Ausgang des Doppelrückschlagventils (56) verbunden ist.

5. Feststellbremsmodul nach einem der vorhergehenden Ansprüche, **dadurch gekennzeichnet, dass**
mit dem Notlöse-Druckmittelanschluss (44) ein Reifenfüllanschluss verbindbar ist und, sofern das Feststellbremsmodul (2) mindestens einen weiteren Druckmittelanschluss (54) aufweist, ein weiterer Druckmittelanschluss (54) mit einem Betriebsbremsanschluss verbindbar ist.

6. Feststellbremsmodul nach einem der vorhergehenden Ansprüche, **dadurch gekennzeichnet, dass**
das Feststellbremsmodul (2) ein Umschaltventil (58) innerhalb der ersten Druckmittelleitung (48) aufweist, wobei das Umschaltventil (58) einen Anschluss aufweist, welcher mit dem Notlöse-Druckmittelanschluss (44) verbunden ist, und einen weiteren Anschluss aufweist, welcher über das Rückschlagventil (52) mit dem Versorgungseingang des druckmittelmengenverstärkenden Ventils (16) verbunden ist.

7. Feststellbremsmodul nach Anspruch 6,
**dadurch gekennzeichnet, dass**
das Umschaltventil (58) derart ausgebildet ist, dass es in Abhängigkeit des an dem Druckmitteleingang (4) des Feststellbremsmoduls (2) anliegenden Druckes seinen Schaltzustand ändert.

8. Feststellbremsmodul nach einem der vorhergehenden Ansprüche, **dadurch gekennzeichnet, dass**
das Feststellbremsmodul (2) ein Doppelabsperrventil (64) und einen weiteren Druckmittelanschluss (66) aufweist,
das Doppelabsperrventil (64) zwei Eingänge und einen Ausgang aufweist, wobei das Doppelabsperrventil (64) derart ausgebildet ist, dass derjenige Eingang, an dem der kleinere der an den Eingängen anliegenden Drücke anliegt, mit dem Ausgang des Doppelabsperrventils (64) verbunden ist und wobei der Ausgang des Doppelabsperrventils (64) mit dem Steuereingang des druckmittelmengenverstärkenden Ventils (16) verbunden ist, und
der Druckmittelanschluss (66) über den einen der zwei Eingänge des Doppelabsperrventils (64) mit dem Steuereingang des druckmittelmengenverstärkenden Ventils (16) derart fluidisch verbunden ist, dass Druckmittel zu diesem Steuereingang strömt, falls der an dem Druckmittelanschluss (66) anliegende Druck geringer, als der an dem Ausgang des Doppelrückschlagventils (46), und somit an dem anderen der zwei Eingänge des Doppelabsperrventils (64) anliegenden Druck ist.

9. Feststellbremsmodul nach Anspruch 8,
**dadurch gekennzeichnet, dass**
über den weiteren Druckmittelanschluss (66) ein 2/2-Wege-Ventil (70), ein 3/2-Wege-Ventil (76) oder eine externe Ventillogik mit dem Feststellbremsmodul (2) verbunden ist, wobei das 2/2-Wege-Ventil (70), das 3/2-Wege-Ventil (76) oder die externe Ventillogik beabstandet zum Feststellbremsmodul (2) angeordnet sind.

10. Feststellbremsmodul nach einem der vorhergehenden Ansprüche,
**dadurch gekennzeichnet, dass**
der Druckmitteleingang (4) des Feststellbremsmoduls (2) und/oder der oder die Druckmittelanschlüsse (44, 54) jeweils einen Partikelfilter (62) aufweisen.

11. Bremsanlage mit einer Feststellbremseinrichtung,
**gekennzeichnet durch**
mindestens ein Feststellbremsmodul (2) nach einem der Ansprüche 1 bis 10, wobei das Feststellbremsmodul (2) derart ausgebildet ist, dass es eine Notlösefunktion der Feststellbremseinrichtung bereitstellt.

12. Fahrzeug,
**gekennzeichnet durch**
mindestens ein Feststellbremsmodul (2) nach einem der Ansprüche 1 bis 10 und/oder
mindestens eine Bremsanlage nach Anspruch 11

13. Verfahren zum Betreiben einer Feststellbremseinrichtung einer druckmittelbetriebenen Bremsanlage mit einem Feststellbremsmodul (2) mit dem eine Druckmittelbeaufschlagung mindestens eines Bremsaktuators (40) steuerbar ist, wobei das Feststellbremsmodul (2) eine elektronische Steuereinrichtung (20), mindestens ein von der Steuereinrichtung (20) betätigbares Magnetventil (14), ein druckmittelmengenverstärkendes Ventil (16) zur Druckmittelbeaufschlagung des mindestens einen Bremsaktuators (40) und mindestens einen Druckmitteleingang (4), über den dem Feststellbremsmodul (2) Druckmittel zuführbar ist, aufweist **dadurch gekennzeichnet,**
**dass** zum Notlösen einer eingelegten Feststellbremse der Feststellbremseinrichtung ein Notlöse-Druckmittelanschluss (44) mit Druckmittel beaufschlagt wird und Mittels eines Doppelrückschlagventils (46) ein an dem Steuereingang des druckmittelmengenverstärkenden Ventils (16) anliegender Druck zum Steuern der Druckmittelbeaufschlagung des mindestens einen Bremsaktuators (40) bestimmt wird,
**wobei** das Feststellbremsmodul (2) einen Notlöse-Druckmittelanschluss (44) und ein Doppelrückschlagventil (46) mit zwei Eingängen und einem Ausgang aufweist, **wobei** mittels einer ersten Druckmittelleitung (48) des Feststellbremsmoduls (2) **der** Notlöse-Druckmittelanschluss (44) über ein Rückschlagventil (52) mit dem Versorgungseingang des druckmittelmengenverstärkenden Ventils (16) derart fluidisch verbunden **ist,** dass Druckmittel durch diese erste Druckmittelleitung (48) von dem Notlöse-Druckmittelanschluss (44) zu dem druckmittelmengenverstärkenden Ventil (16) strömt, falls der an dem Notlöse-Druckmittelanschluss (44) anliegende Druck größer als der an dem Versorgungseingang des druckmittelmengenverstärkenden Ventils (16) anliegende Druck ist, und **wobei** mittels einer zweiten Druckmittelleitung (50) des Feststellbremsmoduls (2) der Notlöse-Druckmittelanschluss (44) oder ein weiterer Druckmittelanschluss (54) des Feststellbremsmoduls (2) mit einem ersten Eingang des Doppelrückschlagventils (46) derart fluidisch verbunden **ist,** dass Druckmittel durch diese zweite Druckmittel-, leitung (50) von dem Notlöse-Druckmittelanschluss (44) zu dem Doppelrückschlagventil (46) strömt, falls der an dem Notlöse-Druckmittelanschluss (44) anliegende Druck größer als der an dem zweiten Eingang des Doppelrückschlagventils (46) anliegende Druck ist oder dass Druckmittel durch diese zweite Druckmittelleitung (50) von dem weiteren Druckmittelanschluss (54) zu dem Doppelrückschlagventil (46) strömt, falls der an dem weiteren Druckmittelanschluss (54) anliegende Druck größer als der an dem zweiten Eingang des Doppelrückschlagventils (46) anliegende Druck und größer als der an dem Notlöse-Druckmittelanschluss (44) anliegende Druck **ist.**

## Claims

1. A parking brake module of a parking brake device, with which an application of pressure medium of at least one brake actuator (40) can be controlled, wherein the parking brake module (2) has an electronic control device (20), at least one solenoid valve (14) that can be actuated by the control device (20), a pressure medium boosting valve (16) for application of pressure medium of the at least one brake actuator (40) and at least one pressure medium input (4), via which the parking brake module (2) can be supplied with pressure medium,
wherein
the parking brake module (2) has an emergency release pressure medium connection (44) and a double check valve (46) with two inputs and one output,
**characterized in that**
the parking brake module (2) has a first pressure medium line (48), with which the emergency release pressure medium connection (44) is fluidically connected via a check valve (52) to the supply input of the pressure medium boosting valve (16) such that pressure medium pressure means flows through this first pressure medium line (48) from the emergency release pressure medium connection (44) to the pressure medium boosting valve (16), in case the applied pressure on the emergency release pressure medium connection (44) is greater than the applied pressure on the supply input of the pressure medium boosting valve (16), and
the parking brake module (2) has a second pressure medium line (50), via which the emergency release pressure medium connection (44) or a further pressure medium connection (54) of the parking brake module (2) is fluidically connected to a first input of the double check valve (46) such that pressure medium pressure means flows through this second pressure medium line (50) from the emergency release pressure medium connection (44) to the double check valve (46), in case the applied pressure on the emergency release pressure medium connection (44) is greater than the applied pressure on the second input of the double check valve (46) or the pressure medium pressure means flows through this second pressure medium line (50) from the further pressure medium connection (54) to the double check valve (46), in case the applied pressure on the further pressure medium connection (54) is greater than the applied pressure on the second input of the double check valve (46) and is greater than the applied pressure on the emergency release pressure medium connection (44) .

2. The parking brake module according to claim 1,
**characterized in that**
the double check valve (46) has two inputs and one output and provides a select-high function, wherein the double check valve (46) is configured such that the input which has the greater pressure is connected to the output of the double check valve (46).

3. The parking brake module according to claim 2,
**characterized in that**
the output of the double check valve (46) is directly connected to the control input of the pressure medium boosting valve (16) by means of a pressure medium line or
the output of the double check valve (46) is indirectly connected to the control input of the pressure medium boosting valve (16) by means of at least one pressure medium line (22) via at least one valve (24) and/or
the output of the double check valve (46) is connected to a trailer control valve (36) by means of at least one pressure line (22) via at least one solenoid valve (26).

4. The parking brake module according to any of the preceding claims,
**characterized in that**
in the presence of an emergency release pressure medium connection (44) and a further pressure medium connection (54) these are each connected to an input of a further double check valve (56), wherein the further double check valve (56) is configured such that the input at which the greater of the applied pressures is applied is connected to the output of the double check valve (56).

5. The parking brake module according to any of the preceding claims,
**characterized in that**
a tire inflation port can be connected to the emergency release pressure medium connection (44) and, provided the parking brake module (2) has at least one further pressure medium connection (54), a further pressure medium connection (54) can be connected to a service brake port.

6. The parking brake module according to any of the preceding claims,
**characterized in that**
the parking brake module (2) has a switching valve (58) within the first pressure medium line (48), wherein the switching valve (58) has a connection, which is connected to the emergency release pressure medium connection (44), and has a further connection, which is connected to the supply input of the pressure medium boosting valve (16) via the check valve (52) .

7. The parking brake module according to claim 6,
**characterized in that**
the switching valve (58) is configured such that it changes its switching state depending on the applied pressure on the pressure medium input (4) of the parking brake module (2) .

8. The parking brake module according to any of the preceding claims,
**characterized in that**
the parking brake module (2) has a double shut-off valve (64) and a further pressure medium connection (66),
the double shut-off valve (64) has two inputs and one output, wherein the double shut-off valve (64) is configured such that the input at which the smaller of the applied pressures is applied at the inputs is connected to the output of the double shut-off valve (64) and wherein the output of the double shut-off valve (64) is connected to the control input of the pressure medium boosting valve (16), and
the pressure medium connection (66) is fluidically connected via the one of the two inputs of the double shut-off valve (64) to the control input of the pressure medium boosting valve (16) such that pressure medium flows to the control input if the applied pressure on the pressure medium connection (66) is lower than that on the output of the double check valve (46) and hence applied pressure is on the other of the two inputs of the double shut-off valve (64).

9. The parking brake module according to claim 8,
**characterized in that**
a 2/2-way valve (70), a 3/2-way valve (76) or an external valve logic is connected via the further pressure medium connection (66) to the parking brake module (2), wherein the 2/2-way valve (70), the 3/2-way valve (76) or the external valve logic are arranged spaced apart from the parking brake module (2).

10. The parking brake module according to any of the preceding claims,
**characterized in that**
the pressure medium input (4) of the parking brake module (2) and/or the pressure medium connections (44, 54) each have a particle filter (62).

11. A brake system with a parking brake device,
**characterized by**
at least one parking brake module (2) according to any of claims 1 to 10, wherein the parking brake module (2) is configured such that it provides an emergency release function of the parking brake device.

12. A vehicle
**characterized by**
at least one parking brake module (2) according to any of claims 1 to 10 and/or
at least one brake system according to claim 11.

13. A method for operating a parking brake device of a pressure-medium operated brake system with a parking brake module (2) with which an application of pressure medium of at least one brake actuator (40) can be controlled, wherein the parking brake module (2) has an electronic control device (20), at least one solenoid valve (14) that can be actuated by the control device (20), a pressure medium boosting valve (16) for application of pressure medium of the at least one brake actuator (40) and at least one pressure medium input (4), via which the parking brake module (2) can be supplied with pressure medium,
**characterized in**
**that** for the emergency release of an engaged parking brake of the parking brake device pressure medium is applied to an emergency release pressure medium connection (44) and by means of a double check valve (46) an applied pressure on the control input of the pressure medium boosted valve (16) for controlling the application of pressure medium of the at least one brake actuator (40) is determined,
wherein the parking brake module (2) has an emergency release pressure medium connection (44) and a double check valve (46) with two inputs and one output, wherein by means of a first pressure medium line (48) of the parking brake module (2) the emergency release pressure medium connection (44) is fluidically connected via a check valve (52) to the supply input of the pressure medium boosting valve (16) such that pressure medium flows through this first pressure medium line (48) from the emergency release pressure medium connection (44) to the pressure medium boosting valve (16), if the applied pressure on the emergency release pressure medium connection (44) is greater than the applied pressure on the supply input of the pressure medium boosting valve (16), and
wherein by means of a second pressure medium line (50) of the parking brake module (2) the emergency release pressure medium connection (44) or a further pressure medium connection (54) of the parking brake module (2) is fluidically connected to a first input of the double check valve (46) such that pressure medium flows through this second pressure medium line (50) from the emergency release pressure medium connection (44) to the double check valve (46), if the applied pressure on the emergency release pressure medium connection (44) is greater than the applied pressure is on the second input of the double check valve (46) or that pressure medium flows through this second pressure medium line (50) from the further pressure medium connection (54) to the double check valve (46), if the applied pressure on the further pressure medium connection (54) is greater than the applied pressure on the second input of the double check valve (46) and greater than the applied pressure on the emergency release pressure medium connection (44).

## Revendications

1. Module de frein de stationnement d'un dispositif de frein de stationnement, avec lequel une alimentation en fluide sous pression peut être commandée au moyen d'un actionneur de frein (40), dans lequel le module de frein de stationnement (2) présente un dispositif de commande (20) électronique, au moins une électrovanne (14) pouvant être actionnée par le dispositif de commande (20), une soupape augmentant la quantité de fluide sous pression (16) pour alimenter en fluide sous pression le au moins un actionneur de frein (40) et au moins une entrée de fluide sous pression (4), par l'intermédiaire de laquelle du fluide sous pression peut être amené au module de frein de stationnement (2),
dans lequel
le module de frein de stationnement (2) présente un raccordement de fluide sous pression de desserrage d'urgence (44) et un double clapet antiretour (46) avec deux entrées et une sortie,
**caractérisé en ce que**
le module de frein de stationnement (2) présente une première conduite de fluide sous pression (48), avec laquelle le raccordement de fluide sous pression de desserrage d'urgence (44) est en liaison fluidique avec l'entrée d'alimentation de la soupape augmentant la quantité de fluide sous pression (16) par l'intermédiaire d'un clapet antiretour (52), de telle sorte que le fluide sous pression s'écoule à travers cette première conduite de fluide sous pression (48) du raccordement de fluide sous pression de desserrage d'urgence (44) à la soupape augmentant la quantité de fluide sous pression (16), au cas où la pression s'appliquant au raccordement de fluide sous pression de desserrage d'urgence (44) serait supérieure à la pression s'appliquant à l'entrée d'alimentation de la soupape augmentant la quantité de fluide sous pression (16), et
le module de frein de stationnement (2) présente une deuxième conduite de fluide sous pression (50), par l'intermédiaire de laquelle le raccordement de fluide sous pression de desserrage d'urgence (44) ou un autre raccordement de fluide sous pression (54) du module de frein de stationnement (2) est en liaison fluidique avec une première entrée du double clapet antiretour (46), de telle sorte que le fluide sous pression s'écoule à travers cette deuxième conduite de fluide sous pression (50) du raccordement de fluide sous pression de desserrage d'urgence (44) au double clapet antiretour (46), au cas où la pression s'appliquant au raccordement de fluide sous pression de desserrage d'urgence (44) serait supérieure à la pression s'appliquant à la deuxième entrée du double clapet antiretour (46) ou que le fluide sous pression s'écoule à travers cette deuxième conduite de fluide sous pression (50) de l'autre raccordement de fluide sous pression (54) au double clapet antiretour (46), au cas où la pression s'appliquant à l'autre raccordement de fluide sous pression (54) serait supérieure à la pression s'appliquant à la deuxième entrée du double clapet antiretour (46) et supérieure à la pression s'appliquant au raccordement de fluide sous pression de desserrage d'urgence (44).

2. Module de frein de stationnement selon la revendication 1,
**caractérisé en ce que**
le double clapet antiretour (46) présente deux entrées et une sortie et fournit une fonction sélection haute, dans lequel le double clapet antiretour (46) est réalisé de telle sorte que l'entrée qui présente la plus grande pression est reliée à la sortie du double clapet antiretour (46).

3. Module de frein de stationnement selon la revendication 2,
**caractérisé en ce que**
la sortie du double clapet antiretour (46) est reliée directement à l'entrée de commande de la soupape augmentant la quantité de fluide sous pression (16) au moyen d'une conduite de fluide sous pression ou
la sortie du double clapet antiretour (46) est reliée indirectement à l'entrée de commande de la soupape augmentant la quantité de fluide sous pression (16) au moyen d'au moins une conduite de fluide sous pression (22) par l'intermédiaire d'au moins une soupape (24) et/ou
la sortie du double clapet antiretour (46) est reliée à une soupape de commande de remorque (36) au moyen d'au moins une conduite de fluide sous pression (22) par l'intermédiaire d'au moins une électrovanne (26).

4. Module de frein de stationnement selon l'une quelconque des revendications précédentes,
**caractérisé en ce que**
en présence d'un raccordement de fluide sous pression de desserrage d'urgence (44) et d'un autre raccordement de fluide sous pression (54), ceux-ci sont reliés respectivement à une entrée d'un autre double clapet antiretour (56), dans lequel l'autre double clapet antiretour (56) est réalisé de telle sorte que l'entrée à laquelle s'applique la plus grande des pressions s'appliquant aux entrées est reliée à la sortie du double clapet antiretour (56).

5. Module de frein de stationnement selon l'une quelconque des revendications précédentes,
**caractérisé en ce que**
un raccordement de gonflage de pneumatique peut être relié au raccordement de fluide sous pression de desserrage d'urgence (44) et, dans la mesure où le module de frein de stationnement (2) présente au moins un autre raccordement de fluide sous pression (54), un autre raccordement de fluide sous pression (54) peut être relié à un raccordement de frein de service.

6. Module de frein de stationnement selon l'une quelconque des revendications précédentes,
**caractérisé en ce que**
le module de frein de stationnement (2) présente une soupape de commutation (58) à l'intérieur de la première conduite de fluide sous pression (48), dans lequel la soupape de commutation (58) présente un raccordement, lequel est relié au raccordement de fluide sous pression de desserrage d'urgence (44), et présente un autre raccordement, lequel est relié à l'entrée d'alimentation de la soupape augmentant la quantité de fluide sous pression (16) par l'intermédiaire du clapet antiretour (52).

7. Module de frein de stationnement selon la revendication 6,
**caractérisé en ce que**
la soupape de commutation (58) est réalisée de telle sorte qu'elle modifie son état de commutation en fonction de la pression s'appliquant à l'entrée de fluide sous pression (4) du module de frein de stationnement (2).

8. Module de frein de stationnement selon l'une quelconque des revendications précédentes,
**caractérisé en ce que**
le module de frein de stationnement (2) présente un double robinet d'arrêt (64) et un autre raccordement de fluide sous pression (66),
le double robinet d'arrêt (64) présente deux entrées et une sortie, dans lequel le double robinet d'arrêt (64) est réalisé de telle sorte que l'entrée à laquelle s'applique la plus petite des pressions s'appliquant aux entrées est reliée à la sortie du double robinet d'arrêt (64) et dans lequel la sortie du double robinet d'arrêt (64) est reliée à l'entrée de commande de la soupape augmentant la quantité de fluide sous pression (16), et
le raccordement de fluide sous pression (66) est en liaison fluidique avec l'entrée de commande de la soupape augmentant la quantité de fluide sous pression (16) par l'intermédiaire d'une des deux entrées du double robinet d'arrêt (64), de telle sorte que le fluide sous pression s'écoule vers cette entrée de commande, au cas où la pression s'appliquant au raccordement de fluide sous pression (66) serait inférieure à la pression s'appliquant à la sortie du double clapet antiretour (46), et par conséquent à l'autre des deux entrées du double robinet d'arrêt (64).

9. Module de frein de stationnement selon la revendication 8,
**caractérisé en ce que**
un distributeur à 2/2 voies (70), un distributeur à 3/2 voies (76) ou une logique de vanne externe est relié(e) au module de frein de stationnement (2) par l'intermédiaire de l'autre raccordement de fluide sous pression (66), dans lequel le distributeur à 2/2 voies (70), le distributeur à 3/2 voies (76) ou la logique de vanne externe sont disposés à distance du module de frein de stationnement (2).

10. Module de frein de stationnement selon l'une quelconque des revendications précédentes,
**caractérisé en ce que**
l'entrée de fluide sous pression (4) du module de frein de stationnement (2) et/ou le ou les raccordements de fluide sous pression (44, 54) présentent respectivement un filtre à particules (62).

11. Système de freinage avec un dispositif de frein de stationnement,
**caractérisé par**
au moins un module de frein de stationnement (2) selon l'une quelconque des revendications 1 à 10, dans lequel le module de frein de stationnement (2) est réalisé de telle sorte qu'il fournit une fonction de desserrage d'urgence du dispositif de frein de stationnement.

12. Véhicule,
**caractérisé par**
au moins un module de frein de stationnement (2) selon l'une quelconque des revendications 1 à 10 et/ou
au moins un système de freinage selon la revendication 11.

13. Procédé pour faire fonctionner un dispositif de frein de stationnement d'un système de freinage fonctionnant avec un fluide sous pression avec un module de frein de stationnement (2) avec lequel une alimentation en fluide sous pression peut être commandée au moyen d'un actionneur de frein (40), dans lequel le module de frein de stationnement (2) présente un dispositif de commande (20) électronique, au moins une électrovanne (14) pouvant être actionnée par le dispositif de commande (20), une soupape augmentant la quantité de fluide sous pression (16) pour alimenter en fluide sous pression le au moins un actionneur de frein (40) et au moins une entrée de fluide sous pression (4), par l'intermédiaire de laquelle du fluide sous pression peut être amené au module de frein de stationnement (2),
**caractérisé en ce**
**que** pour le desserrage d'urgence d'un frein de stationnement enclenché du dispositif de frein de stationnement, un raccordement de fluide sous pression de desserrage d'urgence (44) est alimenté avec du fluide sous pression et une pression s'appliquant à l'entrée de commande de la soupape augmentant la quantité de fluide sous pression (16) pour commander l'alimentation en fluide sous pression du au moins un actionneur de frein (40) est déterminée au moyen d'un double clapet antiretour (46),
dans lequel le module de frein de stationnement (2) présente un raccordement de fluide sous pression de desserrage d'urgence (44) et un double clapet antiretour (46) avec deux entrées et une sortie, dans lequel le raccordement de fluide sous pression de desserrage d'urgence (44) est en liaison fluidique avec l'entrée d'alimentation de la soupape augmentant la quantité de fluide sous pression (16) par l'intermédiaire d'un clapet antiretour (52) au moyen d'une première conduite de fluide sous pression (48) du module de frein de stationnement (2), de telle sorte que le fluide sous pression s'écoule à travers cette première conduite de fluide sous pression (48) du raccordement de fluide sous pression de desserrage d'urgence (44) à la soupape augmentant la quantité de fluide sous pression (16), au cas où la pression s'appliquant au raccordement de fluide sous pression de desserrage d'urgence (44) serait supérieure à la pression s'appliquant à l'entrée d'alimentation de la soupape augmentant la quantité de fluide sous pression (16), et
dans lequel le raccordement de fluide sous pression de desserrage d'urgence (44) ou un autre raccordement de fluide sous pression (54) du module de frein de stationnement (2) est en liaison fluidique avec une première entrée du double clapet antiretour (46) au moyen d'une deuxième conduite de fluide sous pression (50) du module de frein de stationnement (2), de telle sorte que du fluide sous pression s'écoule à travers cette deuxième conduite de fluide sous pression (50) du raccordement de fluide sous pression de desserrage d'urgence (44) au double clapet antiretour (46), au cas où la pression s'appliquant au raccordement de fluide sous pression de desserrage d'urgence (44) serait supérieure à la pression s'appliquant à la deuxième entrée du double clapet antiretour (46) ou que du fluide sous pression s'écoule à travers cette deuxième conduite de fluide sous pression (50) de l'autre raccordement de fluide sous pression (54) au double clapet antiretour (46), au cas où la pression s'appliquant à l'autre raccordement de fluide sous pression (54) serait supérieure à la pression s'appliquant à la deuxième entrée du double clapet antiretour (46) et supérieure à la pression s'appliquant au raccordement de fluide sous pression de desserrage d'urgence (44).
